# FASCICULE DE BREVET EUROPEEN

(11) **EP 1 864 287 B1**
(45) Date de publication et mention de la délivrance du brevet: **25.08.2010**
(21) Numéro de dépôt: 06726142.0
(22) Date de dépôt: 23.03.2006
(51) Int. Cl.: G11B 7/243

(54) **SUPPORT D ENREGISTREMENT OPTIQUE IRREVERSIBLE PAR FORMATION DE BULLES AYANT UNE HAUTEUR LIMITEE PAR LA SOURCE DE GAZ LES GENERANT**
IRREVERSIBLES OPTISCHES AUFZEICHNUNGSMEDIUM DURCH AUSBILDUNG VON BLASEN MIT EINER DURCH DIE SIE ERZEUGENDE GASQUELLE BEGRENZTEN HÖHE
IRREVERSIBLE OPTICAL RECORDING MEDIUM BY FORMATION OF BUBBLES HAVING A HEIGHT LIMITED BY THE GAS SOURCE GENERATING THEM

(30) Priorité: 29.03.2005 FR 0503032
(43) Date de publication de la demande: 12.12.2007
(73) Titulaire: COMMISSARIAT A L'ENERGIE ATOMIQUE, 75015 Paris (FR); MPO International, 53700 Averton (FR)
(72) Inventeur: POUPINET, Ludovic, F-38360 Sassenage (FR); HAZART, Jérôme, F-38320 Eybens (FR); HYOT, Bérangère, F-38320 Eybens (FR); PLISSONNIER, Marc, F-38320 Eybens (FR)
(74) Mandataire: Hecké, Gérard
(86) Numéro de dépôt international: PCT/FR2006/000649
(87) Numéro de publication internationale: WO 2006/103340

(56) Documents cités:
- EP-A- 0 536 406
- PATENT ABSTRACTS OF JAPAN vol. 012, no. 170 (P-705), 20 mai 1988 (1988-05-20) & JP 62 281133 A (TOSHIBA CORP), 7 décembre 1987 (1987-12-07) & DATABASE WPI Derwent Publications Ltd., London, GB; AN 1988-018219 & JP 05 072018 B (TOSHIBA CORP; TOKYO SHIBAURA ELECTRIC CO) 7 décembre 1987 (1987-12-07)
- PATENT ABSTRACTS OF JAPAN vol. 009, no. 162 (M-394), 6 juillet 1985 (1985-07-06) & JP 60 034896 A (NIPPON DENSHIN DENWA KOSHA), 22 février 1985 (1985-02-22)

## Description

### Domaine technique de l'invention

L'invention concerne un support d'enregistrement optique irréversible, comportant au moins une couche active présentant une face arrière et une face avant destinée à recevoir au moins un rayonnement optique d'écriture, ledit rayonnement optique d'écriture permettant, au moyen d'une couche formant une source de gaz disposée sur la face arrière de la couche active, de former localement, dans ladite couche active, des bulles de gaz.

### État de la technique

L'enregistrement optique, par exemple sur des supports de type CD-R (disque compact enregistrable également connu sous le nom anglo-saxon «Compact Disc Recordable») et DVD-R (disque numérique polyvalent enregistrable également connu sous le nom anglo-saxon "Digital Versatile Disc Recordable »), est, le plus souvent, réalisé grâce à une couche active en matériau organique colorant. La couche active est déposée sur un substrat en matière plastique et elle est recouverte par une couche métallique réflectrice. Les technologies d'enregistrement optique irréversible dans des matériaux à colorant présentent, cependant, des coûts de fabrication élevés.

Il a, également, été proposé de réaliser des supports d'enregistrement optique à l'aide d'une couche active en matériau inorganique. Une des techniques irréversibles les plus étudiées consiste à former des marques, en forme de trous, dans la couche active, par ablation laser. La présence de la marque se traduit alors par une baisse locale de la réflexion d'un faisceau laser balayant la surface du disque.

Une autre technique d'écriture irréversible consiste à former, dans la couche active en matériau inorganique, des marques en forme de bulles, en utilisant, généralement, une couche active capable de se déformer localement sous l'effet d'un rayonnement optique d'écriture et d'une source de gaz. La technique d'écriture par formation de bulles peut, cependant, provoquer des problèmes de suivi de piste après écriture et donc des difficultés de lecture.

En effet, dans les supports d'enregistrement par formation de bulles, le suivi de piste est, généralement, réalisé au moyen d'un substrat en plastique comportant une face avant munie d'une piste en forme de spirale. Ainsi, la face avant du substrat comporte, généralement des zones en creux formant un sillon et délimitées par des zones en relief. La face avant est recouverte par une couche active semi-réfléchissante, apte à subir des déformations locales en forme de bulles, sous l'effet d'un faisceau laser focalisé. L'enregistrement des données est, généralement, obtenu par un faisceau laser provenant de la face arrière du substrat et focalisé sur le sillon de la face avant du substrat. Le faisceau laser étant tout ou en partie absorbé, il provoque alors un échauffement local dans le support, permettant au substrat de libérer du gaz. Le gaz libéré par le substrat provoque, alors, une déformation locale, sous forme de bulle, dans la couche active, de préférence au niveau d'une zone en creux de la face avant du substrat. Le substrat étant relativement dur, la bulle constituant une marque d'écriture se forme généralement, dans la couche active, du côté opposé au substrat, au niveau d'une zone en creux de la face avant du substrat.

Or, dans les supports d'optique classiques, un faisceau laser de lecture provient de la face arrière du substrat et la lecture est obtenue par un système d'asservissement en suivi de piste, c'est-à-dire en suivant le sillon formé par les zones en creux de la face avant (donc en relief pour le faisceau laser de lecture). De plus, la qualité du suivi de piste est sensible à la moyenne de la différence de niveau entre les zones en creux et les zones en relief de la face avant du substrat. Après une opération d'écriture, la moyenne du niveau du sillon formé par les zones en creux de la face avant est sensiblement également au niveau des zones en relief, ce qui handicape le suivi de piste car il ne peut plus faire la différence entre les zones en creux et les zones en relief. La lecture peut alors devenir difficile.

Pour remédier à ce problème, il a été proposé, dans la demande de brevet WO-A-2005/010876, de réaliser les opérations d'écriture et de lecture, à travers une couche de protection, opposée au substrat comportant la piste et comportant des faces avant et arrière planes. De plus, une couche déformable destinée à suivre les déformations formées localement dans la couche active est disposée entre la couche active et la couche de protection traversée par le rayonnement optique d'écriture et/ou de lecture. Par ailleurs, les bulles sont, de préférence, réalisées au niveau des zones en relief de la piste, de sorte qu'après une opération d'écriture, les différences de niveau entre les zones en creux, les zones en relief, respectivement écrites et vierges, sont maximales. Le suivi de piste après écriture est, ainsi, facilité.

Cependant, le support d'enregistrement selon la demande de brevet WO-A-2005/010876 présente encore certains inconvénients. En effet, pour une puissance d'écriture élevée, la hauteur des bulles peut s'avérer être trop élevée. Ceci peut à nouveau engendrer une perturbation du suivi de piste et donc des difficultés de lecture. De plus, le contrôle de la hauteur des bulles peut s'avérer être délicat à réaliser, notamment lorsque la stratégie d'écriture est limitée.

### Objet de l'invention

L'invention a pour but d'obtenir un support d'enregistrement optique irréversible par formation de bulles remédiant aux inconvénients selon l'art antérieur et permettant, plus particulièrement, un bon suivi de piste.

Selon l'invention, ce but est atteint par le fait que la couche formant la source de gaz a une épaisseur inférieure ou égale à 100nm et elle est, de préférence, en oxyde de silicium amorphe hydrogéné dopé par du carbone.

Selon un mode particulier de réalisation, la couche active est, de préférence, disposée entre une couche de protection et un substrat comportant une face arrière libre et une face avant munie d'une piste.

Selon un premier développement de l'invention, la couche formant la source de gaz est disposée entre la face avant du substrat et la face arrière de la couche active.

Selon un second développement de l'invention, la couche formant la source de gaz est disposée entre la face arrière de la couche active et la couche de protection.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente schématiquement, en coupe, un premier mode de réalisation d'un support d'enregistrement optique selon l'invention, la couche formant la source de gaz étant disposée entre la couche active et le substrat muni d'une piste.
Les figures 2 à 4 représentent schématiquement, en coupe, des variantes de réalisation du support selon la figure 1.
La figure 5 représente la variation de la modulation en puissance d'écriture, en fonction de la hauteur des bulles dans un support selon la figure 4, avec une couche source de gaz ayant une épaisseur variant entre 10nm et 60nm.
La figure 6 représente schématiquement, en coupe, un second mode de réalisation d'un support d'enregistrement optique selon l'invention, la couche formant la source de gaz étant disposée entre la couche active et la couche de protection.
La figure 7 illustre, schématiquement, en coupe, une variante de réalisation du support selon la figure 6.

### Description de modes particuliers de réalisation

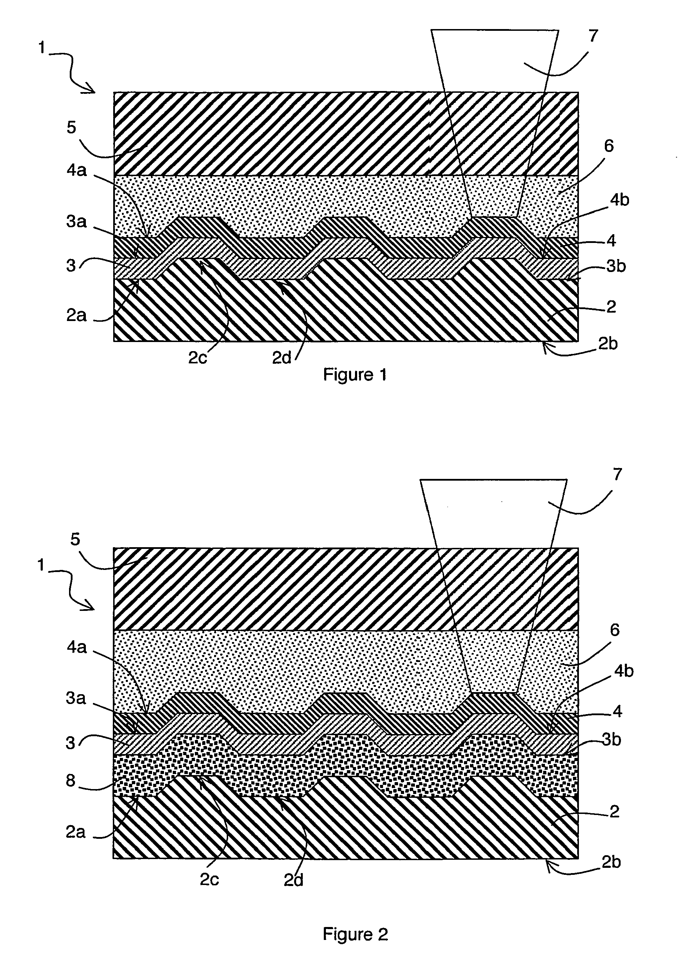

Dans un premier mode de réalisation représenté à la figure 1, un support d'enregistrement optique de données 1, irréversible, est constitué d'un empilement de plusieurs couches minces superposées. L'empilement comporte successivement un substrat 2, une couche 3 formant une source de gaz, une couche active 4 et une couche de protection 5 fixée à la couche active 4 par une couche adhésive 6.

Le substrat 2 est muni d'une face avant 2a comportant une piste, de préférence en forme de spirale et d'une face arrière libre 2b. La face avant 2a comporte, ainsi, des zones en relief 2c et des zones en creux 2d. Comme dans le support d'enregistrement selon la demande de brevet WO-A-2005/010876, la piste de la face avant 2a du substrat est, de préférence, formée par les zones en relief 2c.

La couche 3 formant la source de gaz ainsi que la couche active 4 ont chacune, de préférence, une épaisseur uniforme. Elles comportent, ainsi, chacune des faces avant 3a et 4a et arrière 3b et 4b. Les faces avant 3a et 4a respectivement de la couche 3 et de la couche active 4 ont, alors, une géométrie analogue à celle du substrat 2.

La couche active 4 est une couche apte à être déformée localement sous l'effet d'un rayonnement optique d'écriture 7. Elle est, par exemple, constituée par un alliage de tellure et d'étain (SnTe) ou bien par un alliage de tellure et de zinc (ZnTe) ou bien par un empilement de deux couches respectivement en ZnTe et en SnTe avec chacune une épaisseur de 20nm. Le rayonnement optique d'écriture 7 est reçu par la face avant 4a de la couche active 4 et il est, de préférence, focalisé au niveau de la partie de la couche active 4 recouvrant la piste du substrat, c'est-à-dire des zones en relief 2c de la face avant 2a du substrat. Lors d'une opération d'écriture de données, le rayonnement optique d'écriture 7 provoque, alors, un échauffement dans le support d'enregistrement. L'échauffement permet, alors, à la source de gaz disposée sur la face arrière 4b de la couche active 4 de libérer localement du gaz. Le gaz libéré forme alors une bulle de gaz dans la couche active 4, au niveau de la partie de la couche active 4 recouvrant la piste du substrat. La bulle constitue alors une marque capable d'être lue, par exemple, par un rayonnement optique de lecture.

La couche 3 formant la source de gaz a une épaisseur inférieure ou égale à 100 nanomètres (nm) et elle est, de préférence en oxyde de silicium amorphe hydrogéné dopé par du carbone (noté SiCO:H). Une telle couche 3 et plus particulièrement son épaisseur permettent de contrôler efficacement la quantité de gaz libéré. En effet, la faible épaisseur de la couche 3 formant la source de gaz permet de contrôler la quantité de gaz libéré et permet d'obtenir des bulles de gaz dont la hauteur est limitée, assurant, ainsi, un bon suivi de piste. Par ailleurs, lorsque la couche 3 est formée par un oxyde de silicium amorphe hydrogéné dopé par du carbone (SiCO:H), les conditions de dépôt de la couche 3 sont, de préférence, choisies de manière à favoriser la formation de liaisons de faibles énergies, de type Si-H et Si-C et facilement décomposables sous l'effet de la chaleur.

Le matériau du substrat 2 est, de préférence, choisi, de manière à fournir une quantité de gaz négligeable par rapport à celle dégagée par la couche 3. Cela peut être un matériau ne dégazant pas ou bien un matériau ayant une température de décomposition ou de dégazage beaucoup plus élevée que celle de la couche 3. Ainsi, la quantité de gaz libéré provient uniquement de la couche 3 qui forme, alors la source de gaz principale et quasi-unique du support d'enregistrement.

Si le substrat 2 employé est susceptible de dégager une quantité non négligeable de gaz, une couche supplémentaire 8 peut être disposée entre la couche 3 et le substrat 2, comme représenté à la figure 2. La couche supplémentaire 8 est destinée à limiter le dégazage du substrat 2 et donc à renforcer le contrôle de la quantité de gaz dégagé et donc la hauteur des bulles formées. La couche supplémentaire 8 fait, alors, office de couche tampon entre le substrat 2 et la couche 3. Elle peut, par exemple, être constituée par une couche diélectrique déposée par pulvérisation magnétron.

La couche disposée sur la face avant 4a de la couche active 4 et traversée par le rayonnement optique d'écriture 7 est, de préférence, une couche déformable, apte à suivre les déformations de la couche active 4 lors des opérations d'écriture. Ainsi, selon les modes de réalisation représentés aux figures 1 et 2, la couche adhésive 6 disposée entre la couche active 4 et la couche de protection 5 est déformable.

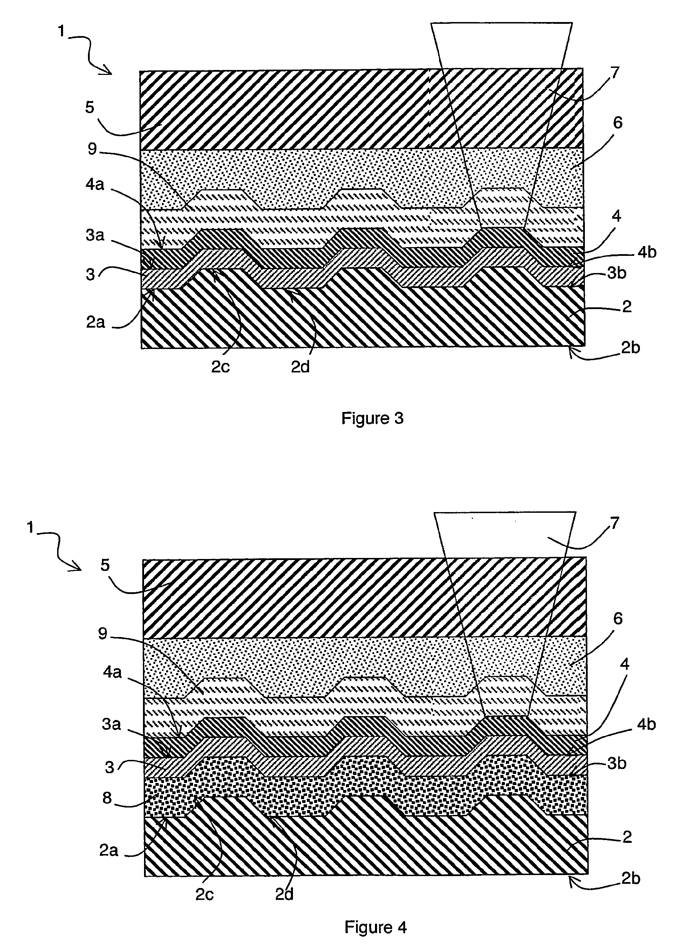

Si la couche adhésive 6 n'est pas suffisamment souple pour permettre la déformation de la couche active 4, une couche déformable 9 supplémentaire peut être disposée sur la face avant 4a de la couche active 4, entre la couche adhésive 6 et la couche active 4. Ainsi, les figures 3 et 4 représentent respectivement des variantes de réalisation des figures 1 et 2, avec une couche déformable 9 disposée entre la couche adhésive 6 et la couche active 4.

A titre d'exemple, un support d'enregistrement tel que représenté à la figure 4 comporte un empilement successif :
- d'un substrat 2 en polycarbonate,
- d'une couche tampon 8 en ZnS-SiO₂ de 100 nm d'épaisseur,
- d'une couche 3 formant la source de gaz, en SiCO:H de 10 nm d'épaisseur,
- d'une couche active 4 en ZnTe de 20 nm d'épaisseur ou en SnTe de 20nm d'épaisseur ou en un empilement de deux couches de 20 nm d'épaisseur chacune et respectivement en ZnTe et en SnTe,
- d'une couche déformable 9 de 10µm en poly(diméthylsiloxane) ou PDMS, par exemple de type Sylgard 184 ®
- d'une couche adhésive 6 en polymère acrylique photoréticulable
- et d'une couche de protection 5 en polycarbonate.

La variation de hauteur des bulles de gaz dans un tel support d'enregistrement, à durée d'impulsion constante, est de l'ordre de 10nm/mW, alors que dans un support d'enregistrement ne comportant ni la couche tampon 8 en ZnS-SiO₂, ni la couche 3 en SiCO:H, la variation de hauteur des bulles est de 20nm/mW. Ainsi, l'utilisation d'une couche formant une source de gaz d'épaisseur limitée permet de limiter la hauteur des bulles lors d'une opération d'écriture et donc de limiter la sensibilité de la hauteur des bulles par rapport à la puissance d'écriture.

De plus, la couche déformable 9 peut avoir une épaisseur inférieure ou égale à 1 micromètre, ce qui permet, également, de limiter la hauteur des bulles formées dans la couche active.

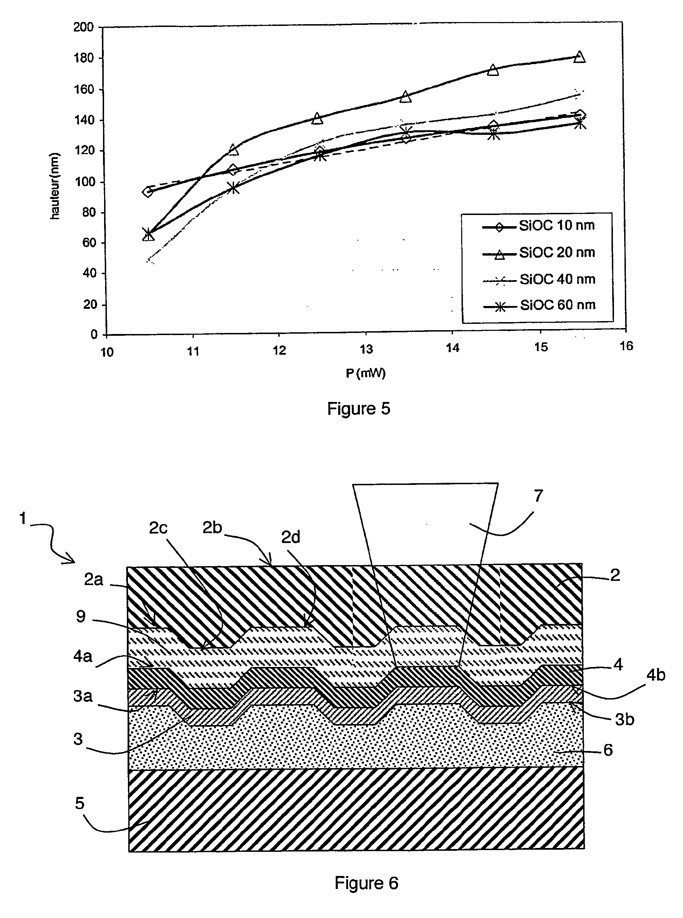

Des opérations d'écriture ont été réalisées dans quatre supports d'enregistrement selon la figure 4, avec une couche 3 d'une épaisseur respectivement de 10, de 20, de 40 et de 60nm. Ainsi, la figure 5 représente la variation de la hauteur d'une bulle réalisée lors d'une opération d'écriture, en fonction de la puissance du faisceau laser observée dans les différents supports. On constate que l'évolution de la hauteur d'une bulle en fonction de la puissance a une pente plus faible pour les puissances élevées que pour les puissances faibles. De plus, sur la courbe représentant une couche 3 de 10nm d'épaisseur, il n'y a pas de variation de pente mais la bulle a une hauteur qui augmente de 10nm par mW de puissance laser, ce qui est deux fois moins que dans le cas d'un support selon l'art antérieur comportant uniquement un substrat en polycarbonate de forte épaisseur. En présence de la couche 3, d'épaisseur limitée, les bulles ont donc bien une hauteur qui varie moins vite en fonction de la puissance.

L'invention n'est pas limitée aux modes de réalisation décrits ci-dessus. A titre d'exemple représenté à la figure 6, le support d'enregistrement optique 1 irréversible peut avoir une structure inversée par rapport à la structure représentée à la figure 1. En effet, au lieu de traverser la couche de protection 5, le rayonnement optique d'écriture 7 peut provenir de la face arrière libre 2a du substrat 2 et traverser le substrat 2 avant d'atteindre la couche active 4. Dans ce cas, la face avant 4a de la couche active 4 est disposée du côté du substrat 2.

Ainsi, à la figure 6, le support d'enregistrement optique de données 1 comporte un empilement de plusieurs couches minces superposées. Le support comporte, ainsi, un substrat 2 présentant une face avant 2a munie d'une piste et d'une face arrière libre 2b. Sur la face avant 2a du substrat, sont successivement disposées la couche déformable 9, la couche active 4, la couche 3 formant la source de gaz et la couche de protection 5 rendu solidaire de la couche active 4 par la couche adhésive 6. La couche déformable 9 est alors disposée sur la face avant 4a de la couche active 4, entre le substrat 2 et ladite couche active 4. La couche 3 formant la source de gaz est, quant à elle, toujours disposée sur la face arrière 4b de la couche active 4, entre la couche active 4 et la couche adhésive 6.

La face avant 2a du substrat comporte des zones en relief 2c et des zones en creux 2d. Les zones en creux 2d forment, de préférence, un sillon en forme de spirale, constituant la piste du substrat. Ainsi, comme dans l'art antérieur, le rayonnement optique d'écriture 7 provient de la face arrière 2b du substrat 2 et il se focalise, de préférence, sur le sillon de la face avant 2a du substrat 2. Ainsi, lors d'une opération de lecture, le signal de suivi de piste suit, de préférence, la partie de la couche active qui recouvre le sillon de la face avant 2a du substrat 2, c'est-à-dire la partie complémentaire ou négative du sillon et il détecte deux types de zones, respectivement vierges et écrites. Or, contrairement à l'art antérieur, le support d'enregistrement selon la figure 6 comporte une couche déformable 9 disposée entre le substrat 2 et la couche active ainsi qu'une couche formant une source de gaz disposée du côté opposé au substrat. Ceci permet de former des bulles, au niveau de la partie de la couche active qui recouvre le sillon et du côté du substrat 2 et non du côté opposé au substrat 2. Ainsi, le signal de suivi de piste peut distinguer, plus facilement que dans un support d'enregistrement selon l'art antérieur, les niveaux des zones écrites de la couche active des autres niveaux de la couche active, et plus particulièrement, des niveaux des zones vierges de la couche active et des niveaux de la partie de la couche active recouvrant les zones en relief de la face avant du substrat.

Le matériau formant la couche adhésive 6 est, de préférence, choisi de manière à fournir une quantité de gaz négligeable par rapport à celle dégagée par la couche 3. Cela peut être un matériau ne dégazant pas ou bien cela peut être un matériau ayant une température de décomposition et/ou de dégazage beaucoup plus élevée que celle de la couche 3. A titre d'exemple, le matériau utilisé peut être une colle acrylique réticulable par rayonnement ultraviolet.

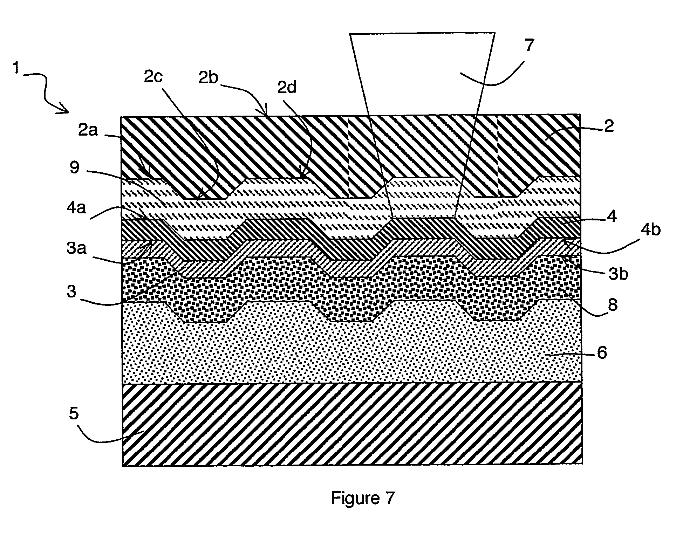

Si la couche adhésive 6 employée est susceptible de dégager une quantité importante de gaz, sous l'action d'un réchauffement, une couche supplémentaire 8 formant une couche tampon peut être disposée entre la couche 3 et la couche adhésive 6, comme représenté à la figure 7. La couche supplémentaire 8 permet, ainsi, de limiter le dégazage de la couche adhésive 6, soit par effet thermique, soit par effet mécanique. Ainsi, la couche supplémentaire 8 peut être une couche en matériau diélectrique déposée par pulvérisation magnétron. Le matériau diélectrique est, par exemple, constitué de 80% de ZnS et de 20% de SiO₂.

## Revendications

1. Support d'enregistrement optique (1) irréversible, comportant au moins une couche active (4) présentant une face arrière (4b) et une face avant (4a) destinée à recevoir au moins un rayonnement optique d'écriture (7), ledit rayonnement optique d'écriture (7) permettant, au moyen d'une couche (3) formant une source de gaz disposée sur la face arrière (4b) de la couche active (4), de former localement, dans ladite couche active (4), des bulles de gaz, support (1) **caractérisé en ce que** la couche (3) formant la source de gaz a une épaisseur inférieure ou égale à 100nm.

2. Support selon la revendication 1, **caractérisé en ce que** la couche (3) formant la source de gaz est en oxyde de silicium amorphe hydrogéné dopé par du carbone.

3. Support selon l'une des revendications 1 et 2, **caractérisé en ce que** la couche active (4) est disposée entre une couche de protection (5) et un substrat (2) comportant une face arrière (2b) libre et une face avant (2a) munie d'une piste.

4. Support selon la revendication 3, **caractérisé en ce que** la couche (3) formant la source de gaz est disposée entre la face avant (2a) du substrat (2) et la face arrière (4b) de la couche active (4).

5. Support selon la revendication 4, **caractérisé en ce que** le support (1) comporte une couche supplémentaire tampon (8) disposée entre la couche (3) formant la source de gaz et le substrat (2).

6. Support selon la revendication 3, **caractérisé en ce que** la couche (3) formant la source de gaz est disposée entre la face arrière (4b) de la couche active (4) et la couche de protection (5).

7. Support selon la revendication 6, **caractérisé en ce qu'**une couche adhésive (6) est disposée entre la couche (3) formant la source de gaz et la couche de protection (5).

8. Support selon la revendication 7, **caractérisé en ce que** le support comporte une couche supplémentaire (8) tampon disposée entre la couche (3) formant la source de gaz et la couche adhésive (6).

9. Support selon l'une quelconque des revendications 1 à 8, **caractérisé en ce qu'**une couche déformable (9) est disposée sur la face avant (4a) de la couche active (4).

10. Support selon la revendication 9, **caractérisé en ce que** la couche déformable (9) a une épaisseur inférieure ou égale à 1 micromètre.

## Claims

1. Irreversible optical recording medium (1) comprising at least an active layer (4) presenting a rear face (4b) and a front face (4a) designed to receive at least an optical writing radiation (7), said optical writing radiation (7) enabling gas bubbles to be formed locally in said active layer (4) by means of a layer (3) forming a gas source arranged on the rear face (4b) of the active layer (4), medium (1) **characterized in that** the layer (3) forming the gas source has a thickness less than or equal to 100nm.

2. Medium according to claim 1, **characterized in that** the layer (3) forming the gas source is made of carbon-doped hydrogenated amorphous silicon oxide.

3. Medium according to one of claims 1 and 2, **characterized in that** the active layer (4) is arranged between a protective layer (5) and a substrate (2) comprising a free rear face (2b) and a front face (2a) provided with a track.

4. Medium according to claim 3, **characterized in that** the layer (3) forming the gas source is arranged between the front face (2a) of the substrate (2) and the rear face (4b) of the active layer (4).

5. Medium according to claim 4, **characterized in that** the medium (1) comprises a buffer additional layer (8) arranged between the layer (3) forming the gas source and the substrate (2).

6. Medium according to claim 3, **characterized in that** the layer (3) forming the gas source is arranged between the rear face (4b) of the active layer (4) and the protective layer (5).

7. Medium according to claim 6, **characterized in that** an adhesive layer (6) is arranged between the layer (3) forming the gas source and the protective layer (5).

8. Medium according to claim 7, **characterized in that** the medium comprises a buffer additional layer (8) arranged between the layer (3) forming the gas source and the adhesive layer (6).

9. Medium according to any one of claims 1 to 8, **characterized in that** a deformable layer (9) is arranged on the front face (4a) of the active layer (4).

10. Medium according to claim 9, **characterized in that** the deformable layer (9) has a thickness less than or equal to 1 micrometer.

## Patentansprüche

1. Irreversibles optisches Speichermedium (1), das mindestens eine aktive Schicht (4) mit einer Rückseite (4b) und einer Vorderseite (4a) umfasst, die dazu vorgesehen ist, mindestens eine optische Schreibstrahlung (7) zu empfangen, wobei die optische Schreibstrahlung (7) mittels einer Schicht (3), die eine auf der Rückseite (4b) der aktiven Schicht (4) angeordnete Gasquelle bildet, die lokale Bildung von Gasblasen in der aktiven Schicht (4) erlaubt, Medium, das **dadurch gekennzeichnet ist, dass** die die Gasquelle bildende Schicht (3) eine Dicke von unter oder gleich 100 nm hat.

2. Medium nach Anspruch 1, **dadurch gekennzeichnet, dass** die die Gasquelle bildende Schicht (3) aus wasserstoffhaltigem, kohlenstoffdotierten amorphen Siliziumoxid besteht.

3. Medium nach einem der Ansprüche 1 und 2, **dadurch gekennzeichnet, dass** die aktive Schicht (4) zwischen einer Schutzschicht (5) und einem Substrat (2) angeordnet ist, das eine freie Rückseite (2b) und eine Vorderseite (2a) umfasst, die mit einer Bahn versehen ist.

4. Medium nach Anspruch 3, **dadurch gekennzeichnet, dass** die die Gasquelle bildende Schicht (3) zwischen der Vorderseite (2a) des Substrats (2) und der Rückseite (4b) der aktiven Schicht (4) vorgesehen ist.

5. Medium nach Anspruch 4, **dadurch gekennzeichnet, dass** das Medium (1) eine zusätzliche Pufferschicht (8) aufweist, die zwischen der die Gasquelle bildenden Schicht (3) und dem Substrat (2) angeordnet ist.

6. Medium nach Anspruch 3, **dadurch gekennzeichnet, dass** die die Gasquelle bildende Schicht (3) zwischen der Rückseite (4b) der aktiven Schicht (4) und der Schutzschicht (5) angeordnet ist.

7. Medium nach Anspruch 6, **dadurch gekennzeichnet, dass** zwischen der die Gasquelle bildenden Schicht (3) und der Schutzschicht (5) eine Klebeschicht (6) angeordnet ist.

8. Medium nach Anspruch 7, **dadurch gekennzeichnet, dass** das Medium eine zusätzliche Pufferschicht (8) aufweist, die zwischen der die Gasquelle bildenden Schicht (3) und der Klebeschicht (6) angeordnet ist.

9. Medium nach einem der Ansprüche 1 bis 8, **dadurch gekennzeichnet, dass** eine verformbare Schicht (9) auf der Vorderseite (4a) der aktiven Schicht (4) vorgesehen ist.

10. Medium nach Anspruch 9, **dadurch gekennzeichnet, dass** die verformbare Schicht (9) eine Dicke von 1 Mikrometer oder weniger aufweist.
